# EUROPEAN PATENT APPLICATION

(11) **EP 1 784 004 A1**
(43) Date of publication of application: **09.05.2007**
(21) Application number: 06122943.1
(22) Date of filing: 25.10.2006
(51) Int. Cl.: H04N 5/00, H04N 7/173

(54) **Broadcast signal handling**

(30) Priority: 03.11.2005 KR 20050105053
(71) Applicant: SAMSUNG ELECTRONICS CO., LTD., Suwon-si, Gyeonggi-do (KR)
(72) Inventor: Shin, Sang-chul, Giheung-eup Yongin-si Gyeonggi-do (KR)
(74) Representative: Derry, Paul Stefan

(57) **Abstract**

A broadcasting signal recording/playing system and method are provided, including a storage apparatus which stores a broadcasting signal therein; a playing apparatus which processes the broadcasting signal and outputs it; and a broadcasting signal tuning apparatus which has a broadcasting signal tuning unit to tune the broadcasting signal, and a recording/playing controller to output a control signal and the broadcasting signal according to a predetermined recording/playing signal to at least one of the storage apparatus and the playing apparatus if the broadcasting signal is received and the predetermined recording/playing signal is supplied. Thus, A broadcasting signal recording/playing system in which a broadcasting tuning apparatus having a broadcasting signal tuner controls respective apparatuses if apparatuses which record and play a broadcasting signal are divided, a broadcasting signal recording/playing apparatus and a broadcasting signal tuning apparatus are provided.

## Description

The invention relates to a broadcast signal recording/playing system, to a broadcast signal tuning apparatus, and to a broadcast signal recording/playing system control method.

As digital broadcasting technology has developed, personal video recorders (PVRs) have become popular in incorporation with computer technology. A PVR comprises a personal moving picture storage apparatus which digitally stores a received broadcasting signal on a hard disk driver (HDD), instead of on a videotape.

A PVR may digitally record a public, cable and satellite broadcasts. If a user presses a pause button whilst watching a non-recorded broadcast, the PVR may record the broadcasting and playback the recording when the user presses the pause button again or presses a play button.

It is conventional to provide a PVR comprising a broadcasting signal receiver which receives the broadcasting signal; a storage unit such as an HDD; and a broadcasting signal playing unit which processes a broadcasting signal received through the broadcasting receiver in a single apparatus.

The invention was made in this context.

Accordingly, it is an aspect of the present invention to provide a broadcasting signal recording/playing system in which a broadcasting tuning apparatus having a broadcasting signal tuner controls respective apparatuses if apparatuses which record and play a broadcasting signal are divided; a broadcasting signal recording/playing apparatus; and a broadcasting signal tuning apparatus.

Additional aspects of the present invention will be set forth in the description which follows.

The foregoing and/or other aspects of the present invention provide a broadcasting signal recording/playing system, the system comprising a storage apparatus which stores a broadcasting signal therein; a playing apparatus which processes the broadcasting signal to be played and outputs it; and a broadcasting signal tuning apparatus which has a broadcasting signal tuning unit to tune the broadcasting signal received from the outside, and a recording/playing controller to output a control signal and the broadcasting signal according to a recording/playing signal to at least one of the storage apparatus and the playing apparatus if the broadcasting signal is received and the predetermined recording/playing signal is supplied.

According to another aspect of the present invention, the recording/playing signal comprises at least one of a recording signal and a playing signal, and wherein the recording/playing controller outputs the broadcasting signal tuned by the broadcasting signal tuning unit to the storage apparatus, and controls the storage apparatus to store the output broadcasting signal therein, if the recording signal is supplied.

According to another aspect of the present invention, the recording/playing controller controls the storage apparatus to store the broadcasting signal received through the broadcasting signal tuning unit, and controls the storage apparatus to output the broadcasting signal stored in the storage apparatus to the playing apparatus, if the playing signal is supplied and the storage apparatus stores the broadcasting signal therein.

According to another aspect of the present invention, the recording/playing controller controls the storage apparatus to store the broadcasting signal received through the broadcasting signal tuning unit, and reads the broadcasting signal stored in the storage apparatus to output it to the playing apparatus, if the playing signal is supplied and the storage apparatus stores the broadcasting signal therein.

According to another aspect of the present invention, the recording/playing controller outputs the broadcasting signal received through the broadcasting signal tuning unit to the playing apparatus if the playing signal is supplied and the storage apparatus does not store the broadcasting signal therein.

According to another aspect of the present invention, the broadcasting signal recording/playing system further comprises a display apparatus which has a display unit to display an image thereon based on the broadcasting signal processed by the playing apparatus to be played.

According to another aspect of the present invention, the broadcasting signal recording/playing system further comprises a user selection unit which is provided in at least one of the display apparatus, the storage apparatus, the playing apparatus and the broadcasting signal tuning apparatus, and selects at least one of the recording signal and the playing signal to be supplied to the recording/playing controller.

The foregoing and/or other aspects of the present invention also provide a broadcasting signal tuning apparatus comprising a broadcasting signal tuning unit which receives and tunes a broadcasting signal; a communication unit which communicates with a predetermined external device; and a recording signal controller which supplies a control signal according to a recording/playing signal to the external device through the communication unit if the broadcasting signal is received and the predetermined recording/playing signal is supplied.

According to another aspect of the present invention, the recording/playing signal comprises at least one of a recording signal and a playing signal, and wherein the recording/playing controller outputs the broadcasting signal and the control signal to store the broadcasting signal, to the external device if the recording signal is supplied.

According to another aspect of the present invention, the recording/playing controller outputs the broadcasting signal received through the broadcasting signal tuning unit and the control signal to store the broadcasting signal, to the external device and outputs the control signal to the external device to play the broadcasting signal stored in the external device, if the playing signal is supplied and it is determined that the broadcasting signal is stored in the external device.

According to another aspect of the present invention, the recording/playing controller outputs the broadcasting signal received through the broadcasting signal tuning unit and the control signal to play the broadcasting signal, to the external device, if the playing signal is supplied and it is determined that the broadcasting signal is not stored in the external device.

According to another aspect of the present invention, the broadcasting signal tuning apparatus further comprises a user selection unit which selects at least one of a recording operation and a playing operation, and wherein the recording/playing controller receives the recording signal if the recording operation is selected through the user selection unit, and receives the playing signal if the playing operation is selected through the user selection unit.

According to another aspect of the present invention, the communication unit receives the recording/playing signal from the external device.

The foregoing and/or other aspects of the present invention also provide a broadcasting signal recording/playing apparatus comprising a communication unit which communicates with a predetermined external device to store a broadcasting signal; a broadcasting signal tuning unit which receives and tunes the broadcasting signal; a playing unit which processes the broadcasting signal to be played and outputs it; and a recording/playing controller which outputs at least one of a control signal according to a recording/playing signal and the broadcasting signal, to at least one of the external device and the playing unit if the broadcasting signal is received and the predetermined recording/playing signal is supplied.

According to another aspect of the present invention, the recording/playing signal comprises at least one of a recording signal and a playing signal, and wherein the recording/playing controller outputs the broadcasting signal and the control signal which controls the external device to store the output broadcasting signal, to the storage apparatus if the recording signal is supplied.

According to another aspect of the present invention, the recording/playing controller outputs the control signal to store the broadcasting signal received through the broadcasting signal tuning unit, to the external device, and outputs the control signal to output the broadcasting signal stored in the external device to the playing unit, to the external device if the playing signal is supplied and the external device stores the broadcasting signal therein.

According to another aspect of the present invention, the recording/playing controller controls the broadcasting signal received through the broadcasting signal tuning unit to be output to the playing unit if the recording signal is supplied and the external device does not store the broadcasting signal therein.

The foregoing and/or other aspects of the present invention also provide a broadcasting signal recording/playing system control method comprising: receiving a broadcasting signal in a signal tuning unit; if a recording signal is input, tuning the broadcasting signal with the signal tuning unit, outputting the tuned broadcast signal and storing the broadcasting signal in a storage device; if a playing signal is input and if the broadcasting signal is stored in a storage device, outputting the broadcasting signal from the storage device to a playing apparatus; if a playing signal is input and if the broadcasting signal is not stored in a storage device, outputting the broadcasting signal received in the signal tuning unit to the playing apparatus; processing the broadcasting signal; and displaying an image on a display unit based on the broadcasting signal.

According to another aspect of the present invention, the broadcasting signal recording/playing system control method further comprises if a playing signal is input and if the broadcasting signal is stored in a storage device, storing the broadcasting signal and a storage control signal to the storage apparatus.

Embodiments of the present invention will now be described, by way of example, with reference to the accompanying drawings, of which:
Figure 1 is a control block diagram of a first embodiment of a broadcasting signal recording/playing system according to the invention;
Figure 2 is a control block diagram of a second embodiment of a broadcasting signal recording/playing system according to the invention; and
Figure 3 is a control flowchart of the embodiments of the broadcasting signal recording/playing system according to the invention.

In the drawings, like reference numerals refer to like elements throughout.

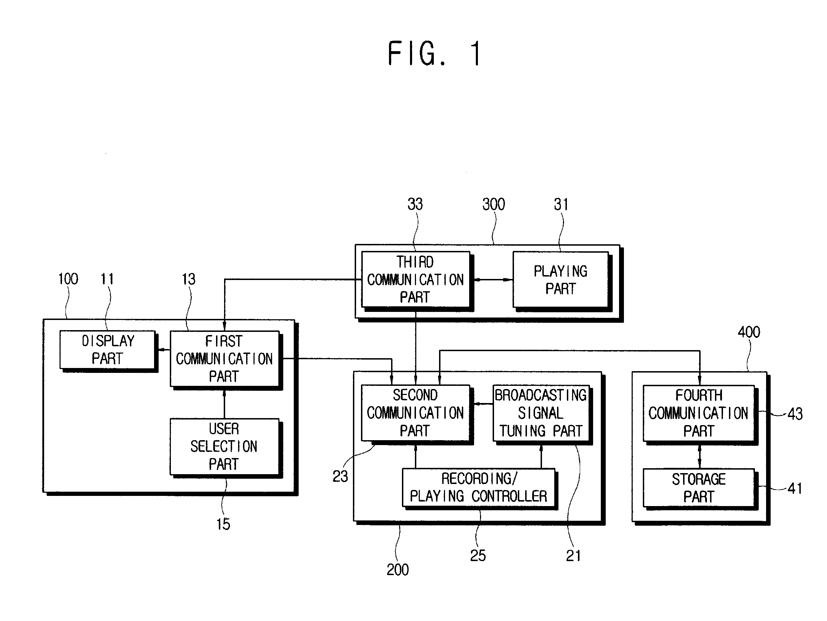

As shown in Figure 1, a broadcasting signal recording/playing system comprises a broadcasting signal tuning apparatus 200 which has a broadcasting signal tuning unit 21 to tune a broadcasting signal, a storage apparatus 400 which has a storage unit 41 to store the broadcasting signal therein, and a playing apparatus 300 which has a playing unit 31 to process the broadcasting signal to be played. The broadcasting signal recording/playing system may further comprise a display apparatus 100 which has a display unit 11.

At least one of the apparatuses of the broadcasting signal recording/playing system comprises a user selection unit 15.

The user selection unit 15 outputs a predetermined key signal to a recording/playing controller 25 of the broadcasting signal tuning apparatus 200 (described below) according to a user input. The user selection unit 15 may comprise a plurality of input keys, a button or a remote controller to allow input or selection of operations by a user. The user selection unit 15 may output a recording/playing signal which comprises at least one of a recording signal and a playing signal to the recording/playing controller 25 of the broadcasting signal tuning apparatus 200 (described below) depending on a user input.

If a user wants to store the broadcasting signal in the storage apparatus 400, e.g., if a pause button is selected, the recording signal is output. If a user wants to play the broadcasting signal, e.g., if a play button is selected, the playing signal is output.

As an example, the user selection unit 15 is provided in the display apparatus 100, but the invention is not limited thereto. Alternatively, the user selection unit 15 may be provided in the broadcasting signal tuning apparatus 200, the storage apparatus 400 or the playing apparatus 300, other than the display apparatus 100. The position of the user selection unit 15 is not limited as long as the user selection unit 15 is provided in one of the respective apparatuses of the broadcasting signal recording/playing system.

The display apparatus 100 includes the display unit 11 which displays images thereon, and a first communication unit 13 which communicates with an external device.

Here, the display unit 11 receives the broadcasting signal output from the playing apparatus 300 (described below) to display an image thereon. The display unit 11 comprises a display module (not shown) which displays an image thereon, and a module driver (not shown) which processes the input broadcasting signal to display an image on the display module.

The display module may comprise a cathode ray tube (CRT), a digital light processing (DLP), a liquid crystal display (LCD) or a plasma display panel (PDP). Here, if the DLP is provided as the display module, the module driver comprises an optical engine. If the LCD is provided as the display module, the module driver comprises a printed circuit board (PCB) which converts an image signal input from a colour converter into a data signal and a gate signal. Also, the display unit 11 may vary according to the type of the display module.

The first communication unit 13 comprises a communication module and a communication terminal through which a communication signal is transmitted. The first communication unit 13 is connected with a third communication unit 33 of the playing apparatus 300 (described below) and receives the broadcasting signal which is processed to be displayed.

The first communication unit 13 may further comprise a terminal which communicates with a second communication unit 23 of the broadcasting signal tuning apparatus 200 (described below) other than the terminal connected with the playing apparatus 300. If the user selection unit 15 is provided in the display apparatus 100, the first communication unit 13 may communicate with the second communication unit 23 to supply the input signal transmitted through the user selection unit 15 to the broadcasting signal tuning apparatus 200. Here, the first communication unit 13 may communicate with the second communication unit 23 through an IEEE 1394, Ethernet or wireless method. The first communication unit 13 may communicate with the third communication unit 33 through the same method as the second communication unit 23, but not limited thereto. Alternatively, the first communication unit 13 may communicate through another communication method if the terminal is additionally provided.

The storage apparatus 400 comprises a fourth communication unit 43 which communicates with the external device, and the storage unit 41 which stores a predetermined broadcasting signal therein.

Here, the fourth communication unit 43 communicates with the second communication unit 23 of the broadcasting signal tuning apparatus 200 (described below) and may be provided as the same standard as the second communication unit 23. For example, the fourth communication unit 43 may communicate with the second communication unit 23 through an IEEE 1394, Ethernet or wireless connection. The storage unit 41 may comprise a memory such as a hard disk drive (HDD). Here, the storage apparatus 400 comprises an external HDD as an example.

The playing apparatus 300 comprises the third communication unit 33 which communicates with the external device, and the playing unit 31 which processes the predetermined broadcasting signal to be played.

The playing unit 31 processes the broadcasting signal corresponding to a channel tuned by the broadcasting signal tuning unit 21 (described below) into a playable signal. Here, the playing unit 31 may comprise at least one of broadcasting signal processing devices such as a scaler or a decoder, to process the broadcasting signal.

The third communication unit 33 comprises a communication module and a communication terminal through which a communication signal is transmitted. The third communication unit 33 is connected with the second communication unit 23 of the broadcasting signal tuning apparatus 200 to receive the broadcasting signal.

The third communication unit 33 may comprises the terminal alone which is connected with the broadcasting signal tuning apparatus 200. However, the third communication unit 33 preferably comprises a terminal which communicates with the first communication unit 13 of the display apparatus 100 (described below). That is, the playing apparatus 300 may supply the processed broadcasting signal to be played, to the display apparatus 100 through the broadcasting signal tuning apparatus 200. Also, the playing apparatus 300 may comprise the terminal to output the processed broadcasting signal to the display apparatus 100 directly. Here, the third communication unit 33 may communicate with the second communication unit 23 through an IEEE 1394, Ethernet or wireless method. The third communication unit 33 may communicate with the first communication unit 13 in the same method as the second communication unit 23. If an additional terminal is provided, the third communication unit 33 may communicate with the first communication unit 13 through another communication method.

The broadcasting signal tuning apparatus 200, e.g., a tuner, comprises the second communication unit 23 which communicates with a communication unit of the external device, the broadcasting signal tuning unit 21 which tunes the broadcasting signal, and the recording/playing controller 25.

As described above with reference to the first communication unit 13, the second communication unit 23 may also communicate through an IEEE 1394, Ethernet or wireless method. If necessary, the second communication unit 23 may communicate with the third and fourth communication units 33 and 43, as well as with the first communication unit 13. Also, the second communication unit 23 may communicate through another communication method, other than the foregoing communication methods, as long as it is a standard communicable with other communication units. The second communication unit 23 may comprise a plurality of terminals which are connected with the respective apparatuses.

The broadcasting signal tuning unit 21 tunes a predetermined channel among a plurality of channels received through an antenna (not shown), according to a tuning control signal supplied from the recording/playing controller 25 (described below). Here, the broadcasting tuning unit 21 comprises an antenna and a unit which receives and tunes the broadcasting signal.

If the broadcasting signal comprises an analogue signal, the broadcasting signal tuning apparatus 200 may further comprise an MPEG codec (not shown) which compresses the analogue broadcasting signal to be output as MPEG data; and an analogue/digital (AD) converter (not shown) which converts the analogue signal into a digital signal.

The recording/playing controller 25 controls the broadcasting signal tuning unit 21 to tune the predetermined channel according to an input signal or stored data of the user selection unit 15.

If the broadcasting signal is received through the broadcasting signal tuning unit 21 and a predetermined recording/playing signal is supplied, the recording/playing controller 25 outputs a control signal and a broadcasting signal according to the recording/playing signal, to at least one of the storage apparatus 400 and the playing apparatus 300.

If a recording signal is supplied through a selection of the user selection unit 15, the recording/playing controller 25 outputs the broadcasting signal tuned by the broadcasting signal tuning unit 21 to the storage apparatus 400, and controls the storage apparatus 400 to store the output broadcasting signal therein. Here, if the user selection unit 15 is provided in the display apparatus 100, the recording signal is supplied to the recording/playing controller 25 through the first communication unit 13 of the display apparatus 100 and through the second communication unit 23 of the broadcasting signal tuning apparatus 200. If the user selection unit 15 is provided in the broadcasting signal tuning apparatus 200, the recording signal is supplied to the recording/playing controller 25 without passing an additional communication unit.

If the recording signal is supplied, the recording/playing controller 25 supplies the broadcasting signal and a storage control signal to store the broadcasting signal, to the fourth communication unit 43 of the storage apparatus 400 through the second communication unit 23. Then, the broadcasting signal input through the fourth communication unit 43 is stored in the storage unit 41 of the storage apparatus 400.

Here, the recording/playing controller 25 converts the analogue broadcasting signal through at least one of the MPEG codec and the A/D converter, and outputs the converted broadcasting signal to the storage unit 41 of the storage apparatus 400 if the analogue broadcasting signal is supplied. If the digital broadcasting signal is supplied, the recording/playing controller 25 preferably stores the digital broadcasting signal in the storage apparatus 400 without an additional conversion. If the broadcasting tuning apparatus 200 comprises a converting unit which converts the digital broadcasting signal, e.g., decodes the digital broadcasting signal, the digital broadcasting signal may be converted.

If the playing signal is supplied and the storage apparatus 400 stores the broadcasting signal therein, the recording/playing controller 25 controls the storage apparatus 400 to store the broadcasting signal received through the broadcasting signal tuning unit 21, and controls the storage apparatus 400 to output the broadcasting signal stored in the storage apparatus 400 to the playing apparatus 300.

If the playing signal is supplied and the storage apparatus 400 stores the broadcasting signal therein, the recording/playing controller 25 controls the storage apparatus 400 to store the broadcasting signal received through the broadcasting signal tuning unit 21, and reads the broadcasting signal stored in the storage apparatus 400 to output the read broadcasting signal to the playing apparatus 300.

If the playing signal is supplied and the storage apparatus 400 does not store the broadcasting signal therein, the recording/playing controller 25 may control the broadcasting signal received through the broadcasting signal tuning unit 21 to be output to the playing apparatus 300.

Then, the playing unit 31 processes the broadcasting signal to be displayed and outputs the broadcasting signal to the first communication unit 13 of the display apparatus 100 through the third communication unit 33, thereby outputting the broadcasting signal to the display unit 11. Alternatively, the recording/playing controller 25 may read the broadcasting signal processed by the playing unit 31 to be played and supply the broadcasting signal from the third communication unit 33 to the second communication unit 23 and then to the first communication unit 13, thereby outputting an image signal to the display apparatus 100.

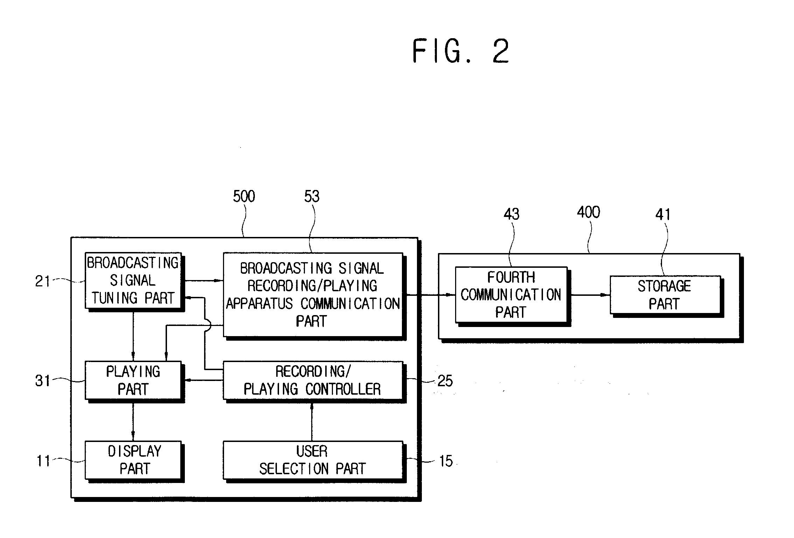

As shown in Figure 2, a second embodiment of a broadcasting signal recording/playing system comprises a broadcasting signal recording/playing apparatus 500 which has a broadcasting signal tuning unit 21, a playing unit 31 and a recording/playing controller 25, and a storage apparatus 400 which has a storage unit 41. Here, the broadcasting signal recording/playing apparatus 500 may further comprise a display unit 11.

Here, the broadcasting signal tuning unit 21, the playing unit 31, the display unit 11 and the storage unit 41 will not be described as they are the same as that in Figure 1. Also, the recording/playing controller 25 and the respective communication units 43 and 53 will not be described here.

If a recording signal is input through a user selection unit 15, the recording/playing controller 25 supplies a broadcasting signal input through the broadcasting signal tuning unit 21 to a fourth communication unit 43 of the storage apparatus 400 through a broadcasting signal recording/playing apparatus communication unit 53. Then, the recording/playing controller 25 controls the storage unit 41 of the storage apparatus 400 to store the broadcasting signal therein.

If a playing signal is input through the user selection unit 15 and the storage unit 41 stores a predetermined image signal therein, the recording/playing controller 25 controls the broadcasting signal input through the broadcasting signal tuning unit 21 to be output to the storage unit 41 of the storage apparatus 400, and controls the storage unit 41 to store the broadcasting signal input through the broadcasting signal tuning unit 21, and supplies the image signal stored in the storage unit 41 to the broadcasting signal recording/playing apparatus 500. Here, the recording/playing controller 25 controls the broadcasting signal from the point of time if it starts being stored in the storage unit 41, i.e., from the recording point of time, to be supplied to the broadcasting signal recording/playing apparatus 500. Accordingly, a viewer may view the broadcasting from the recording point of time.

If the broadcasting signal is supplied through the broadcasting signal recording/playing apparatus communication unit 53, the recording/playing controller 25 supplies the broadcasting signal to the playing unit 31. Then, the playing unit 31 processes the broadcasting signal to be played and outputs it to the display unit 11.

Meanwhile, if the playing signal is input through the user selection unit 15 and the storage unit 41 does not store the predetermined image signal therein, the recording/playing controller 25 outputs the broadcasting signal input through the broadcasting signal tuning unit 21 to the playing unit 31. Then, the playing unit 31 processes the broadcasting signal to be played and outputs it to the display unit 11.

In another embodiment of the present invention (not shown), a broadcasting signal recording/playing system comprises a broadcasting signal recording/playing apparatus 500 which has a broadcasting signal tuning unit 21, a storage unit 41 and a recording/playing controller 25; and a playing apparatus 300 which has a playing unit 31. Here, one of the broadcasting signal recording/playing apparatus 500 and the playing apparatus 300 may further comprise a display unit 11. Alternatively, a display apparatus 100, which has the display unit 11 may be provided as an additional apparatus.

In another embodiment of the present invention (not shown), a broadcasting signal recording/playing system comprises a broadcasting signal recording/playing apparatus 500 which has a storage unit 41 and a playing unit 31, and a broadcasting signal tuning apparatus 200 which has a broadcasting signal tuning unit 21 and a recording/playing controller 25. Here, one of the broadcasting signal recording/playing apparatus 500 and the broadcasting signal tuning apparatus 200 may further comprise a display unit 11. Alternatively, a display apparatus 100, which has the display unit 11 may be provided as an additional apparatus.

The broadcasting signal recording/playing system may be variously provided as long as the recording/playing controller 25 is disposed in the same apparatus together with the broadcasting signal tuning unit 21, and controls other apparatuses.

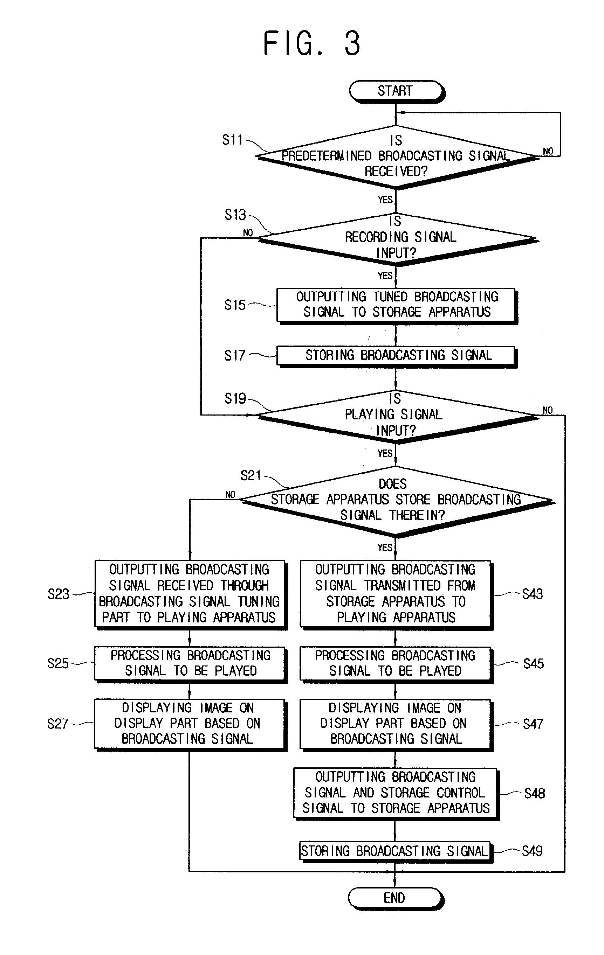

Figure 3 is a control flowchart of the broadcasting signal recording/playing system which comprises a storage apparatus 400, a playing apparatus 300, the broadcasting signal tuning apparatus 200 and the display apparatus 100, as shown in Figure 1. The arrangement of the broadcasting signal recording/playing system may be different.

If the broadcasting signal is received (S11), the broadcasting signal tuning apparatus 200 tunes the broadcasting signal into a predetermined channel according to the predetermined tuning control signal. If the recording signal is input through the user selection unit 15 (S13), the recording/playing controller 25 of the broadcasting signal tuning apparatus 200 outputs the broadcasting signal tuned by the broadcasting signal tuning unit 21, to the storage apparatus 400 (S15). Hereinafter, the recording signal comprises a pause signal as an example of the exemplary embodiment of the present invention.

Here, the recording/playing controller 25 may control the storage apparatus 400 to store the broadcasting signal therein. Then, the storage unit 41 of the storage apparatus 400 stores the broadcasting signal from the point of time if the pause signal is input (S17).

If the predetermined playing signal is input (S19) and the storage apparatus 400 stores the broadcasting signal therein (S21), the recording/playing controller 25 controls the broadcasting signal stored from the time if the pause signal is input, to be output to the playing apparatus 300 from the storage apparatus 400.

As the storage apparatus 400 supplies the broadcasting signal stored therein from the point of time if the pause signal is input, to the broadcasting signal tuning apparatus 200, the broadcasting signal tuning apparatus 200 outputs the broadcasting signal stored in the storage apparatus 400 to the playing apparatus 300 (S43). If the broadcasting signal is input, the playing unit 31 processes the input broadcasting signal to be played by the display apparatus 100 (S45), and outputs the broadcasting signal to the display unit 11 of the display apparatus 100. Then, the display unit 11 displays an image thereon based on the broadcasting signal (S47). If the predetermined playing signal is input (S19) and if the storage apparatus 400 stores the broadcasting signal therein (S21), the recording/playing controller 25 outputs the broadcasting signal and a storage control signal to store the broadcasting signal, to the storage apparatus 400 (S49). Then, the storage unit 41 of the storage apparatus 400 stores the broadcasting signal therein (S49). Here, the operation S48 in which the recording/playing controller 25 outputs the storage control signal to the storage apparatus 400 may be changed with the operation S43 in which the broadcasting signal is output to the playing apparatus 300. Alternatively, the operations 48 and 43 may be simultaneously performed. Accordingly, the operation 49 in which the broadcasting signal is stored in the storage apparatus 400 may be changed with the operation S47 in which the playing apparatus 300 processes the broadcasting signal to be played and the display unit 100 displays the image thereon.

If the predetermined playing signal is input (S19), and if the storage apparatus 400 does not store the broadcasting signal therein (S21), the recording/playing controller 25 outputs the broadcasting signal input through the broadcasting signal tuning unit 21, to the playing apparatus 300 (S23). The playing unit 31 processes the input broadcasting signal to be played by the display apparatus 100 (S25), and then outputs it to the display apparatus 100. The display unit 11 of the display apparatus 100 displays the image thereon based on the broadcasting signal (S27).

As described above, in the broadcasting signal recording/playing system, the broadcasting signal tuning apparatus 200, the playing apparatus 300, the storage apparatus 400 and the display apparatus 100 may be provided additionally or unit of them may be additionally provided. Also, the recording/playing controller 25 provided in the broadcasting signal tuning apparatus 200 controls the respective apparatuses of the broadcasting signal recording/playing system, thereby realizing the recording/playing operation without difficulty even if an additional device is provided to record and play the broadcasting signal.

Although a few embodiments of the present invention have been shown and described, it will be appreciated by those skilled in the art that changes may be made in these embodiments without departing from the principles of the invention, the scope of which is defined in the appended claims.

## Claims

1. A broadcast signal recording/playing system, the system comprising:
storage apparatus for storing a broadcast signal;
playing apparatus for processing the broadcast signal for playback; and
broadcast signal tuning apparatus comprising a broadcast signal tuning unit for tuning to the broadcast signal, and a recording/playing controller,
**characterised in that** at least one of the storage apparatus and the playing apparatus broadcast is located in apparatus separate from and connected to the broadcast signal tuning apparatus.

2. A system according to claim 1, wherein the storage apparatus is located in apparatus separate from and connected to the broadcast signal tuning apparatus, and the playing apparatus is located in apparatus separate from and connected to the broadcast signal tuning apparatus, and the playing apparatus is located in apparatus separate from the storage apparatus.

3. A system according to claim 1 or claim 2, wherein, in response to a record user input, the recording/playing controller is operable to provide the broadcast signal tuned by the broadcast signal tuning unit to the storage apparatus, and to control the storage apparatus to store the output broadcast signal.

4. A system according to either preceding claim, wherein, in response to a play or pause user input following a pause user input, the recording/playing controller is operable to control the storage apparatus to store the broadcast signal received through the broadcast signal tuning unit, and to control the storage apparatus to provide a broadcast signal stored in the storage apparatus to the playing apparatus.

5. A system according to any preceding claim, wherein, in response to a play user input when a broadcast signal is not being recorded, the recording/playing controller is operable to provide a broadcast signal received through the broadcast signal tuning unit to the playing apparatus.

6. A system according to any preceding claim, the system further comprising:
a user selection unit provided in the storage apparatus, the playing apparatus, the broadcast signal tuning apparatus, or a display apparatus, the user selection unit being operable to provide user inputs to the recording/playing controller.

7. A broadcast signal tuning apparatus comprising:
a broadcast signal tuning unit for tuning to and receiving a broadcast signal;
a communication unit; and
a recording signal controller, the recording signal controller being operableto supply a control signal to an external device through the communication unit if a broadcast signal is received and in response to a pause, record or play user input.

8. Apparatus according to claim 7, further comprising a playback unit.

9. Apparatus according to claim 7 or claim 8, wherein the apparatus is arranged to supply a broadcast signal tuned to by the broadcast signal tuning unit to the external device in response to a pause or record user input.

10. A broadcast signal recording/playing system control method comprising:
receiving a broadcast signal in a signal tuning unit;
if a recording signal is input, tuning the broadcast signal with the signal tuning unit, outputting the tuned broadcast signal and storing the broadcast signal in a storage device;
if a playing signal is input and if the broadcast signal is stored in a storage device, outputting the broadcast signal from the storage device to a playing apparatus;
if a playing signal is input and if the broadcast signal is not stored in a storage device, outputting the broadcast signal received in the signal tuning unit to the playing apparatus;
processing the broadcast signal; and
displaying an image based on the broadcast signal.
